# EUROPÄISCHE PATENTANMELDUNG

(11) **EP 2 110 518 A1**
(43) Veröffentlichungstag der Anmeldung: **21.10.2009**
(21) Anmeldenummer: 08007389.3
(22) Anmeldetag: 15.04.2008
(51) Int. Cl.: F01D 25/00, F02C 7/22

(54) **Verfahren zum Reinigen eines Hochtemperaturbauteils sowie eine Vorrichtung**

(71) Anmelder: SIEMENS AKTIENGESELLSCHAFT, 80333 München (DE)
(72) Erfinder: Blomeyer, Malte, Dr., 45472 Mülheim a.d. Ruhr (DE); Böttcher, Andreas, Dr., 40882 Ratingen (DE); Hartanto, Vincentius, 13581 Berlin (DE); Jordan, Karsten, 45219 Essen (DE); Kluge, Andre, 48249 Dülmen (DE); Krieger, Tobias, 46147 Oberhausen (DE); Tüschen, Sabine, 46147 Oberhausen (DE); Zimmermann, Adam, 45476 Mülheim a.d. Ruhr (DE)

(57) **Zusammenfassung**

Die Erfindung betrifft ein Verfahren zum Reinigen eines Hochtemperaturbauteils wobei das Hochtemperaturbauteil zumindest teilweise mit Partikeln (52) gefüllt wird, und wobei das Hochtemperaturbauteil mit den Partikeln (52) in Bewegung insbesondere in Schwingung versetzt wird wodurch sich vorhandene Ablagerungen am Hochtemperaturbauteil lösen.

## Beschreibung

Die vorliegende Erfindung betrifft ein Verfahren zum Reinigen eines Hochtemperaturbauteils. Weiterhin betrifft die Erfindung noch eine Vorrichtung zur Durchführung des Verfahrens.

Die Brenner von Gasturbinen umfassen mehrere rohrartige Brennstoffleitungssysteme, welche für unterschiedliche Brennstoffe ausgebildet sind. Jeder Brenner weist ein erstes Ende auf, an dem über unterschiedliche Anschlüsse dem Brenner Brennstoffe zuführbar sind. Das dem ersten Ende des Brenners gegenüberliegende zweite Ende des Brenners mündet im eingebauten Zustand in die Brennkammer der Gasturbine. Das zweite Ende ist in der Regel mit mehreren Düsensystemen versehen, aus denen der Brennstoff oder ein Brennstoff-Luft-Gemisch in die Brennkammer eingedüst werden kann. Zur Befestigung des Brenners an einer Brennkammerwand ist ein den Brenner umgreifender Brennerflansch zwischen dem ersten und dem zweiten Ende vorgesehen, welcher mit der Brennkammerwand verschraubbar ist.

Während des Betriebs von Brennern kann es zur Verschmutzung durch Ablagerungen kommen, insbesondere im Bereich der Brennerdüsen. Ablagerungen können beispielsweise durch die chemische Reaktion von Schwefelverbindungen im Brennstoff mit dem Grundwerkstoff der Brennerbauteile hervorgerufen werden. Dadurch bilden sich Eisensulfidbeläge im Inneren des Brenners. Diese führen teilweise zur Verstopfung der Bohrungen durch die der Brennstoff in die Brennkammer eingedüst wird. Daraus resultiert eine ungleichmäßige Verbrennung. Dies hat zur Folge, dass der Brenner nicht mehr seine volle Leistung erbringen kann. Zudem können übermäßige Ablagerung Brennerbauteile beschädigen. Insbesondere bei Gasturbinen ist ein Leistungsabfall aufgrund von Verschmutzung des Brenners schädlich, da dadurch die Gesamtleistung und die Emissionsgrenzwerte der Gasturbine negativ beeinträchtigt werden. Die Verfügbarkeit der Gasturbine ist infolgedessen stark beeinträchtigt.

Wenn bei Gasturbinenbrennern Verunreinigungen festgestellt werden, werden heutzutage die Brennerdüsen von Hand durchstoßen. Anschließend sind Ausblasfahrten mit der Gasturbine durchzuführen, in denen Verschmutzungsreste aus den Düsen herausgeblasen werden. Eine andere Methode besteht in dem Einbau neuer Brenner. Diese ist jedoch mit hohen Kosten verbunden. Da das Problem bevorzugt an Maschinen auftritt die mit Vorwärme betrieben werden, ist mit einer hohen Anzahl zu Reinigender Maschinen zu rechnen. Weiterhin ist der Einsatz von Werkzeugen aufgrund der schlechten Zugänglichkeit der verwinkelten Brennstoffpassagen und der Hinterschneidungen in einem Brenner nicht möglich.

Eine mobile Spüleinheit ist in der EP 1 574 675 A2 beschrieben. Diese umfasst flexible Schläuche, die an gegenüberliegenden Enden eines Werkstückes zu befestigen sind. Druckluft und ein Reinigungsfluid können dann durch die flexiblen Schläuche und das dazwischen angeordnete Werkstück gepumpt werden.

US 4,995,915 offenbart ein System zum Reinigen verschmutzter Gasfeuerungsdüsen in Gasturbinen, in welchem dem Gas im laufenden Betrieb der Gasturbine ein chemisches Reinigungsmittel zugesetzt wird.

Die DE 10 2005 009 724 B3 betrifft ein Reinigungsverfahren für Verbrennungsanlagen mit wenigstens einer Brennkammer zur Nachverbrennung von Verbrennungsgasen, bei denen zumindest ein Luftstrahl in die Brennkammer eingeblasen wird, um durch eine Verwirbelung der Verbrennungsgase die Nachverbrennung zu verbessern. Dem Luftstrahl der DE 10 2005 009 724 wird ggf. zeitweise ein Drall vermittelt. Sofern der eingeblasene Luftstrahl bereits einen Drall zum Zweck der besseren Vermischung aufgeprägt bekommt, wird der Drall zu Reinigungszwecken also zusätzlich erzeugt. Ansonsten dient die Drallerzeugung ausschließlich Reinigungszwecken.

Es ist daher Aufgabe der vorliegenden Erfindung, ein vereinfachtes Verfahren zum Reinigen eines Hochtemperaturbauteils, also Bauteilen, welche extrem hohen Temperaturen ausgesetzt (Verbrennungstemperaturen) sind, insbesondere eine gute Reinigung vorkommender Hinterschneidungen, anzugeben. Eine weitere Aufgabe ist die Angabe einer Vorrichtung zur Durchführung des Verfahrens.

Die auf das Verfahren bezogene Aufgabe wird erfindungsgemäß gelöst, durch die Angabe eines Verfahrens zum Reinigen eines Hochtemperaturbauteils wobei das Hochtemperaturbauteil zumindest teilweise mit Partikeln gefüllt wird, und wobei das Hochtemperaturbauteil mit den Partikeln in Bewegung insbesondere in Schwingung versetzt wird wodurch sich vorhandene Ablagerungen am Hochtemperaturbauteil lösen.

Der Erfindung liegt die Kenntnis zugrunde, dass ein nur teilweises Füllen eines zu Reinigenden Bauteils mit Partikeln und ein versetzten des Hochtemperaturbauteil mit den Partikeln in Bewegung insbesondere in Schwingung eine Bewegungs- bzw. Schwingungsbeschleunigung der Partikel hervorruft welche so hoch ist, dass die Partikel an die gegenüberliegenden Wände des Hochtemperaturbauteils prallen und sich somit die Ablagerungen von den Wänden lösen. Die Erfindung hat weiterhin erkannt, dass der Aufprall der Partikel an den Wände des Hochtemperaturbauteils nicht nur die Ablösung der Ablagerungen in dem vom Aufprall unmittelbaren Gebiet zur folge hat, sondern durch den Aufprall und der damit verbundenen Schwingungsbeschleunigung bzw. Erschütterung des Bauteils, insbesondere auch in schwer zugänglichen Hinterschneidungen eine Ablösung der Ablagerungen bewirkt. Zudem kann die Partikelgröße als auch die Füllmenge auf die jeweilige Größe des zu reinigenden Bauteils (bzw. der vorhanden Hohlräume) abgestimmt werden, so dass auch bei kleinen Hohlräumen in dem Bauteil oder Hinterschneidungen selber immer noch Partikel vorfindbar sind. Die Erfindung hat erfasst, dass die Partikel auch in den verwinkelten Brennstoffpassagen bei denen eine manuelle Reinigung mit manuellen Mittel nur sehr schwer oder gar nicht möglich ist Zugang finden. Somit ist eine effiziente Reinigung auch dieser Passagen des Bauteils möglich.

Vorteilhafterweise sind die Partikel als feste Partikel ausgeführt. Dadurch wird der Aufprall an den Wänden des Hochtemperaturbauteils fester, was wiederum eine bessere Ablösung der Beläge bzw. Ablagerungen hervorruft.

In bevorzugter Ausgestaltung wird die Bewegung als Rüttelbewegung ausgeführt. Dies erfolgt beispielsweise unter Zuhilfenahmen eines Schwingtischs, oder eines Rütteltischs. Somit lässt sich eine gezielte Rüttelbewegung und damit eine gezielte Partikelbewegung hervorrufen.

Bevorzugt werden die Partikel und die Ablagerungen nach Ablösen der Ablagerungen durch Ausblasen aus dem Hochtemperaturbauteil zumindest teilweise entfernt. Dies kann per Druckluft oder Kompressor vorgenommen werden. Dabei ist auch das Rückwärtsausblasen anwendbar, d.h. die gelösten Verunreinigungen werden per Druckluft oder angeschlossenem Kompressor von vorne "düsenseitig" durch den Brenner (größere Durchmesser) durch dessen Anschlüsse hinausbefördert.

In bevorzugter Ausgestaltung werden Partikel und die Ablagerungen nach Ablösen der Ablagerungen durch Spülen aus dem Hochtemperaturbauteil zumindest teilweise entfernt werden. Dies kann durch Ansaugen von Flüssigkeit oder durch Spülen mit einer Flüssigkeit unter erhöhtem Druck erfolgen. Auch hier ist das Rückwärtsspülen anwendbar, d.h das die gelösten Verunreinigungen werden mit einer Ansaugkraft oder einer Flüssigkeit unter erhöhtem Druck von vorne "düsenseitig" durch den Brenner (größere Durchmesser) durch dessen Anschlüsse hinausbefördert.

Bevorzugt werden die Partikel und die Ablagerungen nach Ablösen der Ablagerungen durch Drehen des Hochtemperaturbauteils zumindest teilweise entfernt werden. Durch das Drehen wird mittels Schwerkraft eine Schüttelbewegung unterstützt, durch welche die Partikel aus der Öffnung für die Partikel aus dem Hochtemperaturbauteil beispielsweise der Einfüllöffnung und/oder der Anschlussleitung hinausgeschüttelt werden.

Bevorzugt bestehen die Partikel aus Metall, Glas, Keramik oder deren Verbindungen oder Legierungen. Diese zeichnen sich durch besondere Belastungsfähigkeit, welche notwendig ist, da die Partikel einen durch den Aufprall an der Wand des Hochtemperaturbauteils einer hohen Belastung ausgesetzt ist aus.

In bevorzugter Ausgestaltung bestehen die Partikel aus verbrennbarem Material. Bevorzugt werden die Partikel und die Ablagerungen im Hochtemperaturbauteil verbrannt. Dies kann beispielsweise im ganz normalen Betrieb des Hochtemperaturbauteils oder bereits in der Aufwärmphase des Bauteils geschehen. Vorteil hierbei ist das einfache Verfahren der Verbrennung und dass bereits früh das Bauteil wieder in Betrieb genommen werden kann.

Bevorzugt wird als Hochtemperaturbauteil ein Brenner verwendet. Dieser kann beispielsweise als Brenner einer Gasturbine verwendet werden. Aber auch in bei anderen Komponenten eines Kraftwerks, z.B. Kessel, Dampfturbine oder anderen heißgasführenden Leitungen, ist dieses Verfahren anwendbar. Auch in Industriegasturbinen und deren Komponenten ist das Verfahren anwendbar.

Bezogen auf die Vorrichtung wird die Aufgabe gelöst durch die Angabe einer Vorrichtung zur Durchführung des Verfahrens nach einem der vorhergehenden Ansprüche mit einem Hochtemperaturbauteil wobei ein Rütteltisch vorhanden ist sowie eine Fixiervorrichtung zum Fixieren des Hochtemperaturbauteils. Dabei sind die Vorteile, welche für das Verfahren beschrieben wurden auch auf die Vorrichtung übertragbar.

In bevorzugter Ausgestaltung ist der Rütteltisch in alle horizontalen Richtungen beweglich. Weiterhin bevorzugt ist er Rütteltisch in die vertikale Richtung beweglich. In bevorzugter Ausgestaltung ist der Rütteltisch um eine Drehachse drehbar, so dass eine Drehbewegung insbesondere eine Drehschwingung erzielbar ist. Mit einem Rütteltisch kann beispielsweise durch Vibrationen ein Bauteil oder eine ganze Maschine belastet werden. Die Antriebsvariante so eines Rütteltisches kann dabei kreisförmig, elliptisch, linear, schwingend, linear mit stufenlos einstellbarer Wegamplitude schwingend, oder eine Kombination davon sein. Es können aber auch andere schwingende Systeme zum Einsatz kommen.

Vorteilhafterweise weist das Hochtemperaturbauteil eine Einfüllöffnung auf. Diese können zweckmäßigerweise gleich die Anschlussleitungen sein oder andere Öffnungen, die bereits im Bauteil vorhanden sind und eine entsprechende Ausdehnung aufweisen.

Im Folgenden wird die Erfindung beispielhaft anhand einer Zeichnung näher erläutert.

Darin zeigt in vereinfachter und nicht maßstäblicher Darstellung:
- FIG 1: eine schematische Darstellung einer Gasturbine,
- FIG 2: eine Vorrichtung zur Durchführung des Verfahrens.

Gleiche Teile sind in allen Figuren mit denselben Bezugszeichen versehen.

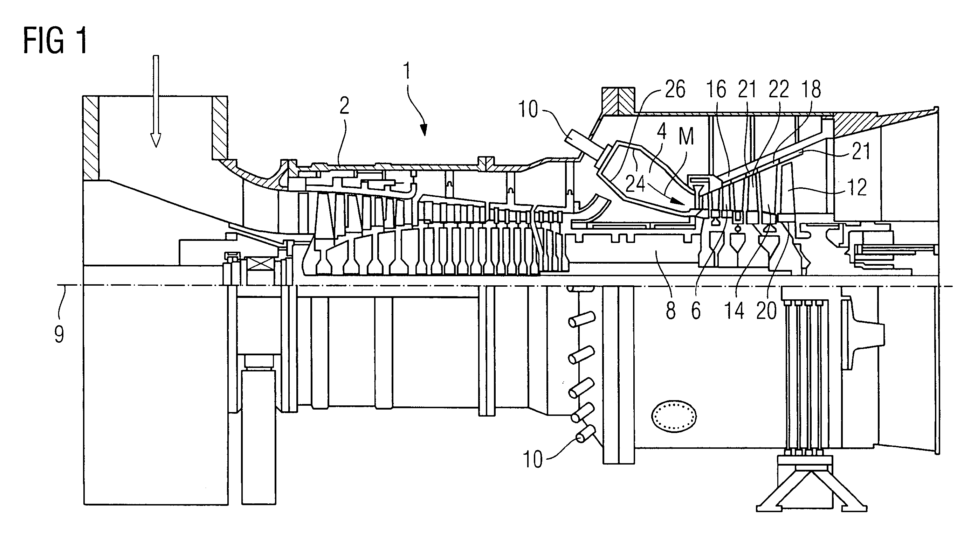

Die Gasturbine 1 gemäß FIG 1 weist einen Verdichter 2 für Verbrennungsluft, eine Brennkammer 4 sowie eine Turbine 6 zum Antrieb des Verdichters 2 und eines nicht näher dargestellten Generators oder einer Arbeitsmaschine auf sowie einen Ringraum 24 zum Überführen des Heißgases M von der Brennkammer 4 zur Turbine 6 auf. Dabei kann es sich um eine Ringbrennkammer, can-annular Brennkammer oder can-Brennkammer handeln. Auch andere Brennkammern mit unterschiedlichen Brennern sind vorstellbar. Die hier vorgestellte Erfindung kann des Weiteren in Industriegasturbinen, Kraftwerksturbinen oder auch Flugzeugturbinen eingesetzt werden. Im Verdichter 4 wird zugeführte Luft L verdichtet. Dazu sind die Turbine 6 und der Verdichter 2 auf einer gemeinsamen, auch als Turbinenläufer bezeichneten Turbinenwelle 8 angeordnet, mit der auch der Generator bzw. die Arbeitsmaschine verbunden ist, und die um ihre Mittelachse drehbar gelagert ist. Die Turbine 6 weist eine Anzahl von mit der Turbinenwelle 8 verbundenen, rotierbaren Laufschaufeln 12 auf. Die Laufschaufeln 12 sind kranzförmig an der Turbinenwelle 8 angeordnet und bilden somit eine Anzahl von Laufschaufelreihen. Weiterhin umfasst die Turbine 6 eine Anzahl von feststehenden Leitschaufeln 14. Die Laufschaufeln 12 dienen zum Antrieb der Turbinenwelle 8 durch Impulsübertrag vom die Turbine 6 durchströmenden heißen Medium, dem Arbeitsmedium, beispielsweise des Heißgases M. Die Leitschaufeln 14 dienen hingegen zur Strömungsführung des Arbeitsmediums beispielsweise des Heißgases M. Das in der Brennkammer 4 beispielsweise entstehende Heißgas M strömt in Strömungsrichtung 38 von der Brennkammer 4 durch einen Ringraum 24 zu der Turbine 6. In dem Ringraum 24 bildet sich ein im Wesentlichen homogen durchmischter Strom des Arbeitsmediums beispielsweise eines Heißgases M aus. Dabei weist die Brennkammer 4 einen Brennkammer-Austrittsabschnitt 37 auf.

Durch die chemische Reaktion von Schwefelverbindungen (H2S) im Brennstoff mit dem Grundwerkstoff der Brennerbauteile bilden sich Eisensulfid-Beläge, das heißt Ablagerungen im Inneren des Brenners. Diese Beläge platzen ab und führen teilweise zu einer Verstopfung der Bohrungen, insbesondere der kleineren Bohrungen, durch die der Brennstoff in die Brennkammer eingedüst wird. Dies hat eine ungleichmäßige Verbrennung zur Folge, wodurch sich die Emissionswerte der betroffenen Brenner stark verschlechtern. Die Verfügbarkeit der Maschine wird stark beeinträchtigt.

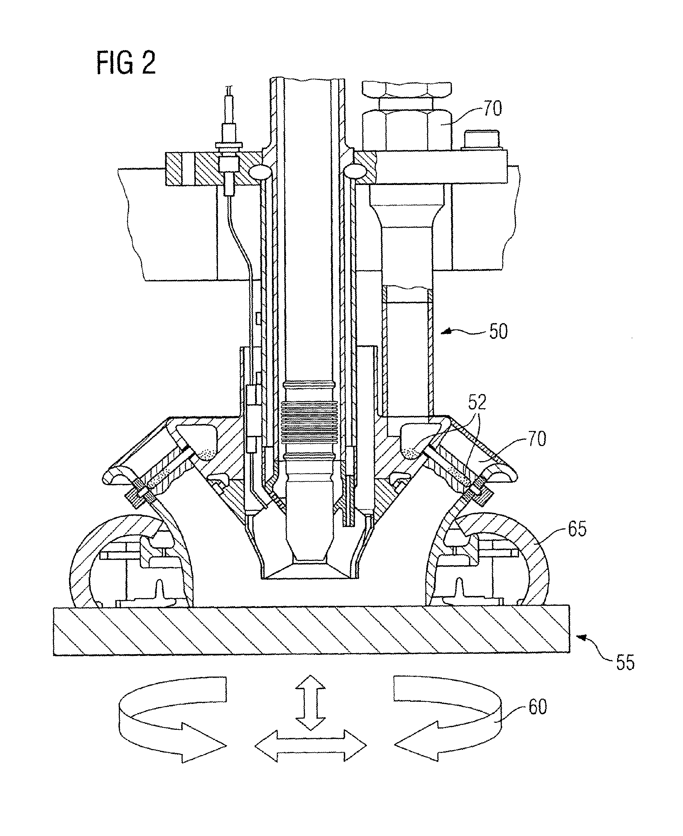

In FIG 2 ist eine Vorrichtung zur Durchführung des Verfahrens gezeigt. Hier wurde ein Brenner 50 auf einem Rütteltisch 70 mittels einer Fixiervorrichtung 65 befestigt. Der Rütteltisch ist dabei in alle Richtungen 60 beweglich. Dabei können diese Bewegungen in Häufigkeit sowie Stärke variieren. Feste Partikel 52 sind durch Einfüllöffnungen 70 in den Brenner 50 eingebracht worden. Dabei sind diese hinsichtlich der Größe auf den jeweiligen Brenner 50 bzw. auf die Größe der Einfüllöffnungen abgestimmt. Je nach Größe können die Partikel 52 auch in kleinere vorhandene Hohlräume des Brenners 50 eindringen. Durch die Bewegung des Rütteltisches 55 wird der Brenner 50 in Schwingungen versetzt. Dabei werden die Partikel 52 in Bewegungen versetzt. Durch die Bewegung werden die Partikel 52 an die Brennerwände geschleudert. Durch den Aufprall der Partikel 52 an den Brennerwänden bzw. an den gegenüberliegenden Wänden und der damit verbundenen Erschütterung wird eine Ablösung der Beläge bzw. Ablagerungen bewirkt. Dadurch wird auch eine Ablösung von Belägen an schwer zugänglichen Stellen bewirkt, da der Aufprall der Partikel 52 auch eine Erschütterung an Wandteilen bewirkt, die nicht direkt selber von den Partikeln 52 getroffen wurden. Nach Ablösen der Beläge bzw. Ablagerungen können die Partikel 52 mitsamt den gelösten Ablagerungen durch Umdrehen des Brenner 50 und anschließende Schüttelbewegung des Brenners 50 entfernen werden. Hierbei wirkt die Schwerkraft unterstützend. Eine weitere alternative oder zusätzliche Möglichkeit ist das Verbrennen der gelösten Ablagerungen mitsamt der Partikel 52 durch beispielsweise Inbetriebnahme des Brenners 50. Weiterhin ist das Rückwartsausblasen oder Rückwärtsspülen der Partikel 52 aus dem Brenner 50 eine zusätzliche/alternative Möglichkeit.

Durch das erfindungsgemäße Verfahren und die Vorrichtung kann auf ätzende bzw. beißende Reinigungsmittel verzichtet werden. Dadurch nämlich vergrößern sich die Düsenöffnungen und es ergibt sich eine Veränderung des Gesamtdurchsatzes des verwendeten Gemisches beispielsweise das Luft/Brenngas und oder Heizöl-Gemisches im Brenner. Durch den Säureangriff können auch Ausätzungen von glatten Konturen z.B. bei den Düsenöffnungen entstehen, die wiederum eine Veränderung der Strömung zur Folge hat. Ein weiterer wesentlicher Vorteil ist der Verzicht auf neue Bauteilkomponenten oder eine Reinigung von Hand. Beides nämlich hätte enorme Kosten sowohl durch die Komponenten an sich als auch durch die langen Stillstandszeiten zur Folge. Vorteilhaft ist weiterhin, dass durch das schnelle und einfache Durchführen des Verfahrens mittels der Vorrichtung eine häufigere Beseitigung der Ablagerungen möglich ist, wodurch nun die Emissionsgrenzwerte wesentlich leichter eingehalten werden können. Weiterhin günstig ist die effiziente Reinigung von Bauteilabschnitten, welche nicht einfach bzw. überhaupt nicht manuell oder nur auf Säurebasis gereinigt werden können (Hinterschneidungen, Hohlräume). Die wird dadurch bewirkt, dass sich das Verfahren nicht nur auf die direkt behandelten Stellen an der Brennkammerwand auswirkt sondern der Aufprall der Partikel eine gesamte Bewegung des Brenners hervorruft wodurch sich die Ablagerungen auch an nicht unmittelbar betroffenen Stellen lösen.

## Patentansprüche

1. Verfahren zum Reinigen eines Hochtemperaturbauteils **dadurch gekennzeichnet, dass**
- das Hochtemperaturbauteil zumindest teilweise mit Partikeln (52) gefüllt wird,
- und das Hochtemperaturbauteil mit den Partikeln (52) in Bewegung insbesondere in Schwingung versetzt wird,
- wodurch vorhandene Ablagerungen am Hochtemperaturbauteil abgelöst werden.

2. Verfahren nach Anspruch 1 **dadurch gekennzeichnet, dass** die Partikel (52) als feste Partikel (52) ausgeführt sind.

3. Verfahren nach Anspruch 1 oder 2 **dadurch gekennzeichnet, dass** die Bewegung (60) als Rüttelbewegung ausgeführt wird.

4. Verfahren nach einem der Ansprüche 1-3 **dadurch gekennzeichnet, dass** die Partikel (52) und die Ablagerungen nach Ablösen der Ablagerungen aus dem Hochtemperaturbauteil zumindest teilweise herausgeblasen werden.

5. Verfahren nach einem der Ansprüche 1-4 **dadurch gekennzeichnet, dass** die Partikel (52) und die Ablagerungen nach Ablösen der Ablagerungen aus dem Hochtemperaturbauteil zumindest teilweise herausgespült werden.

6. Verfahren nach einem der Ansprüche 1-5 **dadurch gekennzeichnet, dass** die Partikel (52) und die Ablagerungen nach Ablösen der Ablagerungen durch Drehen des Hochtemperaturbauteils zumindest teilweise entfernt werden.

7. Verfahren nach einem der Ansprüche 1-6 **dadurch gekennzeichnet, dass** die Partikel (52) aus Metall, Glas, Keramik oder deren Verbindungen oder Legierungen bestehen.

8. Verfahren nach einem der Ansprüche 1-6 **dadurch gekennzeichnet, dass** die Partikel (52) aus verbrennbarem Material bestehen.

9. Verfahren nach Anspruch 8 **dadurch gekennzeichnet, dass** die Partikel (52) und die Ablagerungen im Hochtemperaturbauteil verbrannt werden.

10. Verfahren nach einem der Ansprüche 1-9, **dadurch gekennzeichnet, dass** als Hochtemperaturbauteil ein Brenner (50), insbesondere der Brenner (50) einer Gasturbine, verwendet wird.

11. Vorrichtung zur Durchführung des Verfahrens nach einem der vorhergehenden Ansprüche mit einem Hochtemperaturbauteil **gekennzeichnet durch** einen Rütteltisch (55) und eine Fixiervorrichtung (65) zum Fixieren des Hochtemperaturbauteils.

12. Vorrichtung nach Anspruch 11 **dadurch gekennzeichnet, dass** der Rütteltisch (55) in alle horizontalen Richtungen beweglich ist.

13. Vorrichtung nach einem der Ansprüche 11-12 **dadurch gekennzeichnet, dass** der Rütteltisch (55) in die vertikale Richtung beweglich ist.

14. Vorrichtung nach einem der Ansprüche 11-13 **dadurch gekennzeichnet, dass** der Rütteltisch (55) um eine Drehachse drehbar ist, so dass eine Drehbewegung insbesondere eine Drehschwingung erzielbar ist.

15. Vorrichtung nach einem der Ansprüche 11 -14 **dadurch gekennzeichnet, dass** das Hochtemperaturbauteil eine Einfüllöffnung (70) aufweist.

16. Vorrichtung einem der Ansprüche 11-15 **dadurch gekennzeichnet, dass** das Hochtemperaturbauteil ein Brenner (50) ist, insbesondere ein Brenner (50) einer Gasturbine.
